# EUROPEAN PATENT APPLICATION

(11) **EP 1 574 278 A2**
(43) Date of publication of application: **14.09.2005**
(21) Application number: 05002315.9
(22) Date of filing: 03.02.2005
(51) Int. Cl.: B23K 9/23

(54) **TIG welding method and welded structure by the same**

(30) Priority: 20.02.2004 JP 2004043938
(71) Applicant: TOYODA KOKI KABUSHIKI KAISHA, Aichi-ken (JP)
(72) Inventor: Yamamoto, Tetsuji c/o Toyoda Koki K.K., Kariya-shi Aichi-ken (JP); Kuwabara, Hirofumi c/o Toyoda Koki K.K., Kariya-shi Aichi-ken (JP)
(74) Representative: TBK-Patent

(57) **Abstract**

A TIG welding torch (70) is set in more adjacent to a first bus bar (30) than a second bus bar (40) to generate arc. Consequently, the second bus bar (40) serving as a low melting point member is prevented from over heated, occurrence of blow holes is suppressed, and inadequate melting of the first bus bar (30) serving as a high melting point member is improved, resulting in enhancement of welding strength. The method is applicable to electrical equipment, especially to a motor, provided with a vehicle.

## Description

### INCORPORATION BY REFERENCE

This application based on and claims priority under 35 U.S.C. §119 to Japanese Patent Application No. 2004-043938 filed on February 20, 2004. The contents of that application are incorporated herein by reference.

### BACK GROUND OF THE INVENTION

### Field of the Invention

The present invention relates to TIG (Tungsten Insertion Gas) welding method for TIG welding a high melting point member and a low melting point member, where melting points of two members are different from each other, and welded structure by the method.

### Description of the Related Art

In general TIG welding method, two members are overlapped each other, and welding arc is generated with TIG welding torch facing and being adjacent to the overlapped portion of two members. Two members melt coincidentally and mix each other, then solidifying to form a bead.

However, in the aforementioned conventional TIG welding method, difference between melting points of two members serving as objects of welding causes inconformity between melting degrees of those two members. Therefore, sufficient welding strength is not achieved. Specifically, in case that tough pitch copper whose melting point is relatively high is weld to copper-zinc alloy whose melting point is relatively low by means of conventional TIG welding method, copper-zinc alloy melt sufficiently without tough pitch copper melting sufficiently. On the other hand, when tough pitch copper melt adequately, tin included in copper-zinc alloy sublimates to be gas, then generating a number of blow hole. In either case, sufficient welding strength is not achieved by the conventional TIG welding method.

Notably, although 'JIS (Japanese Industrial Standard) Industrial Term Dictionary' (published by Japanese Standards Association) describes TIG welding method, there has been no bulletins or documents describing techniques for TIG welding two members whose melting points differ each other.

### SUMMARY OF THE INVENTION

The present invention has been devised with considering the aforementioned circumstance, and aims to provide TIG welding method and welded structure that are capable of enhancing, by comparison to conventional method and structure, welding strength between members whose melting points differ each other.

In order to achieve the above and other objects, the present invention provides TIG welding method for welding a high melting point member and a low melting point member whose melting point are different from each other. In the method, a TIG welding torch is set in more adjacent to the high melting point member than the low melting point member to generate arc.

The present invention provides welded structure by TIG welding a high melting point member and a low melting point member whose melting point are different from each other. In the structure, the high melting point member protrudes from a side surface or an end surface of the low melting point member, and the protrusion is melt to form a bead to cover the bonding portion between the high melting point member and the low melting point member.

### BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawing, in which:
Fig. 1 is an exploded view of parts composing a motor concerning to a first embodiment of the present invention.
Fig. 2 is a sectional side view of stator cores and a cylindrical housing of the motor.
Fig. 3 is a plan view of the cylindrical housing and bus bar holder.
Fig. 4 (A) is a perspective view showing the state that bus bars are assembled.
Fig. 4 (B) is a perspective view showing the state that bus bars are welded together.
Fig. 5 is a lateral view showing a TIG welding torch and bus bars.
Fig. 6 is a table indicating pictures of test pieces.
Fig. 7 is a table showing properties of tough pitch copper and copper-zinc alloy.
Fig. 8 is a table showing condition of welding.
Fig. 9 (A) is a perspective view showing the state that a wire is assembled to a bus bar.
Fig. 9 (B) is a perspective view showing the state that the wire is welded to the bus bar.
Fig. 10 is a lateral view showing a TIG welding torch, a bus bar and a wire.

### DESCRIPTION OF THE PREFERRED EMBODIMENT

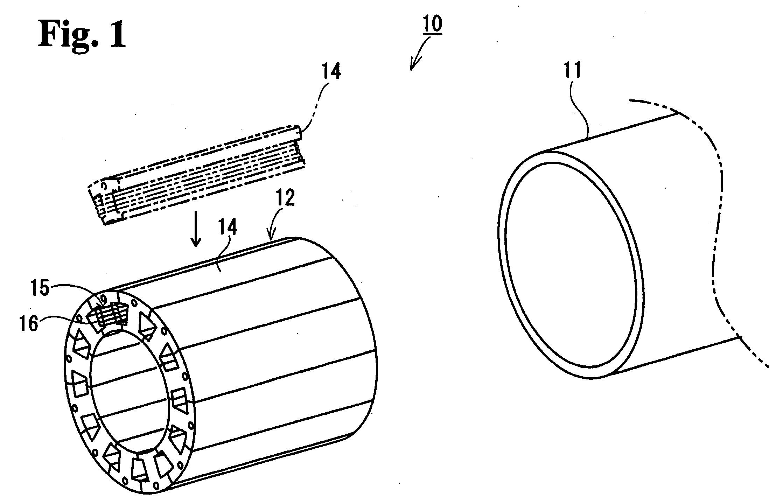

A preferred embodiment, which is applied to a connecting portion included in a motor, of the present invention will be described on the basis of Fig. 1 to Fig. 5. A motor 10 shown in Fig. 1 is a brush-less motor for an electric power steering system incorporated in an automobile, and has a stator core 12 in a cylindrical housing 11.

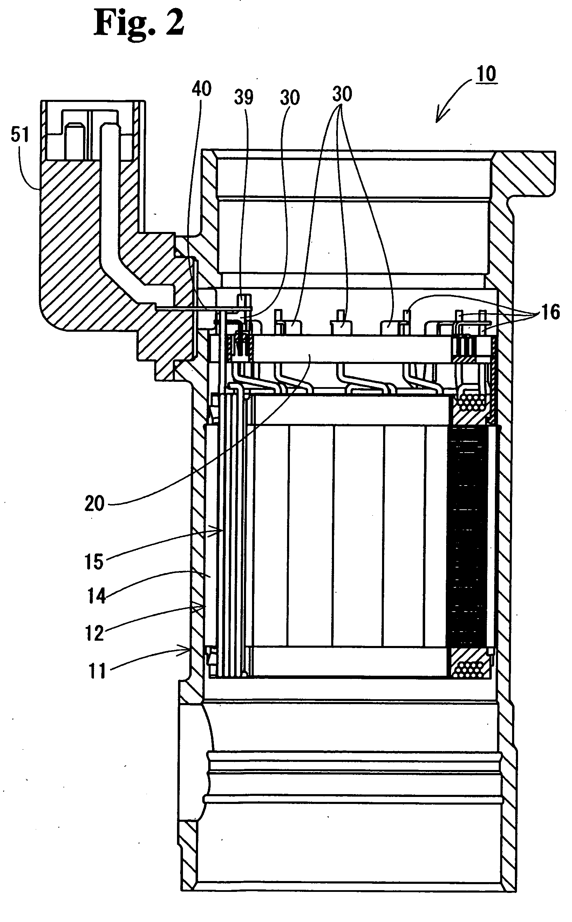

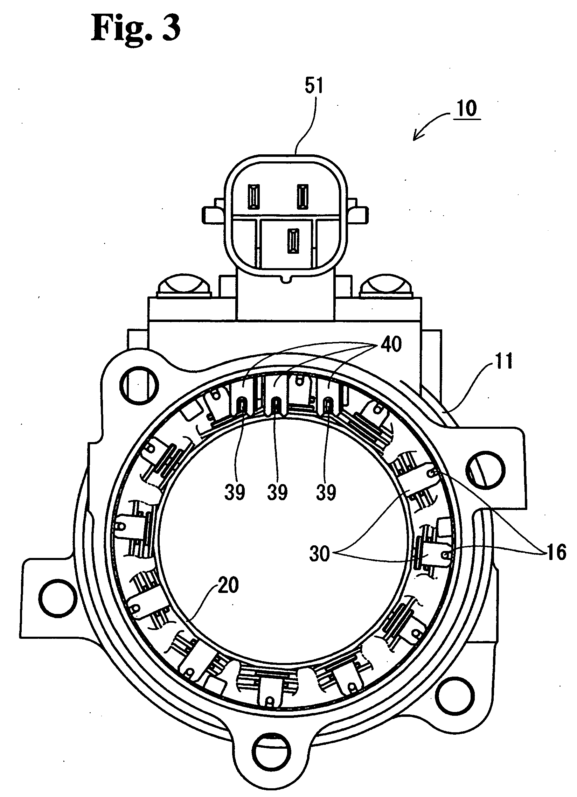

The stator core 12 has a structure being dividable into a number of core bodies in the circumferential direction. A coil 15 is wounded around each core body 14 in the longitudinal direction (axial direction). Both ends of a wire 16 configuring the coil 15 are arranged at one end (upper end in Fig. 2) of the stator core 12, and penetrate a ring-shaped bus-bar holder 20. As shown in Fig. 3, a number of first bus bars 30 are held in the bus-bar holder 20 with insulated each other. Protrusions of the first bus bar 30 are directed to the inner periphery of the cylindrical housing 11, and each of protrusions is welded to one end portion of the associated wire 16. In this embodiment, there are three first bus bars 30, and one first bus bar 30 has four protrusions. In addition, wires 16 configuring the coils 15 are, at the other ends thereof, electrically connected one another to construct a three-phase motor circuit.

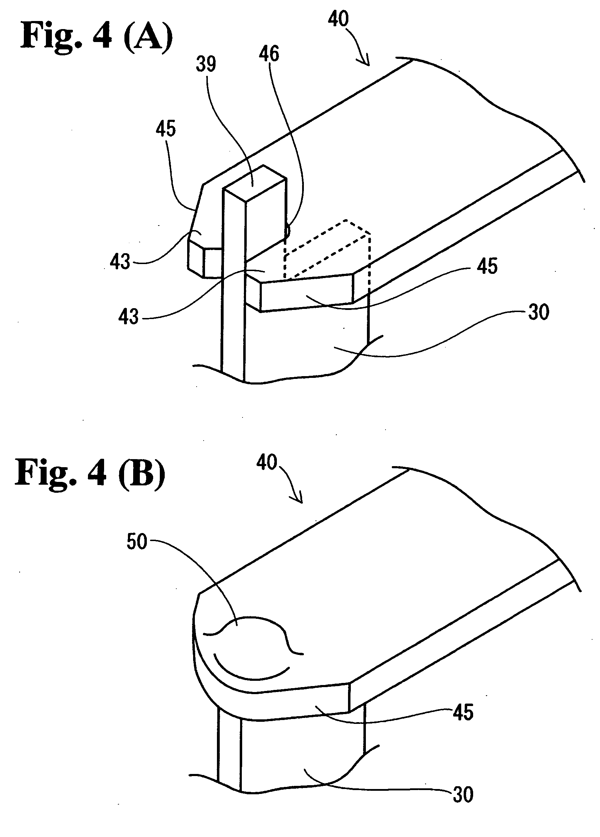

A tip end portion of the first bus bar 30 protrudes from the bus-bar holder 20 toward upper direction in Fig. 2, with forming tongue pieces 39. Further, as shown in Fig. 3, a connector 51 is attached to a periphery surface of the cylindrical housing 11, and accommodates three second bus bars 40 by way of insert forming. A tip end portion of the second bus bar 40 protrudes from a inner periphery surface of the cylindrical housing 11 toward inner space of the same, and is welded to the tip end portion (tongue piece 39) of the first bus bar 30 protruding from the bus-bar holder 20 (with reference to Fig. 4 (B)).

In the present embodiment, the first bus bar 30 is made of tough pitch copper as the 'high melting point member' of the present invention. On the other hand, the second bus bar 40 is made of copper-zinc alloy as the 'low melting point member' of the present invention. Notably, 'high melting point' and 'low melting point' indicates relative relationship between two members. When there are two members whose melting point differs each other, the member having relatively high melting point is designated as 'high melting point', and member having relatively low melting point is designated as 'low melting point'.

The present embodiment embodies the invention in a welding portion between the first bus bar 30 and the second bus bar 40. Specifically, Fig. 4 (A) shows the state before the first bus bar 30 and the second bus bar 40 are welded together. As shown in this Figure, the second bus bar 40 is formed with a slit 46 which breaching the tip end portion thereof. Width of the slit 46 is approximately same with the thickness of the first bus bar 30. Depth of the slit 46 is approximately same with the width of the tongue piece 39 of the first bus bar 30.

As shown in Fig. 4 (A), protrusions 43 formed at both sides of the slit 46 of the second bus bar 40 are line-symmetric about the slit 46. At an outer edge of each protrusion 43, formed is the taper surface 45 which become closer to the slit 46 side as approaching to the tip end thereof. The tongue piece 39 of the first bus bar 30 is inserted into the bottom of the slit 46, and held to protrude from the upper surface of the second bus bar 40. The length of the protrusion is approximately one to three times of the thickness of the second bus bar 40.

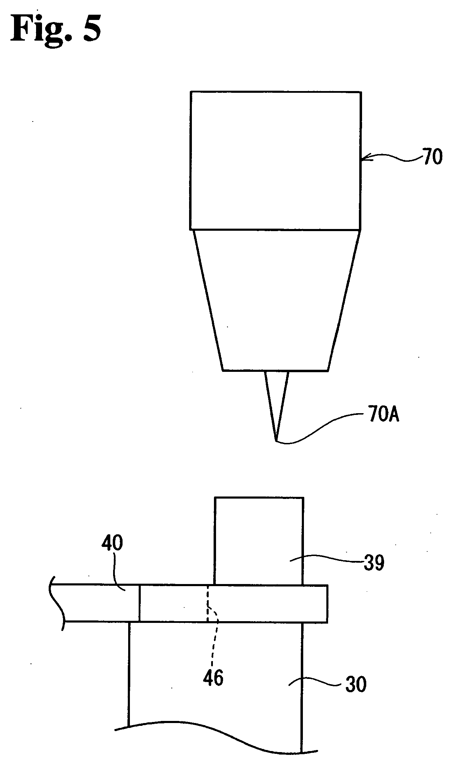

The first bus bar 30 and the second bus bar 40 configured as described above are welded together by way of TIG welding. Specifically, as shown in Fig. 5, a tip end portion 70A of a TIG welding torch 70 is positioned adjacently to the tongue piece 39 of the first bus bar 30, then generating arc. Therefore, the first bus bar 30 (the high melting potion member) which is adjacent to the TIG welding torch 70 receives much more heat in comparison with the second bus bar 40 (the low melting point member). Accordingly, the first bus bar 30 and the second bus bar 40 melt properly. In addition, since protrusions 43 of the second bus bar 40 are formed into tapered shape, tip end sides of protrusions 43 are melted surely. Then, the first bus bar 30 and the second bus bar 40 are mixed in the melted state. When the melted metal coagulates, a bead 50 is formed at a crossing portion between the first bus bar 30 and the second bus bar 40 as shown in Fig. 4 (B), then integrally connecting the first bus bar 30 and the second bus bar 40.

Since the wire 16 is made of tough pitch copper same as the first bus bar 30, the wire 16 and the first bus bar 30 are welded together by way of conventional welding, i.e. welding between members having same melting point, to connect integrally.

According to the TIG welding method and welded structure of this embodiment described above, the TIG welding torch 70 is positioned at closer to the first bus bar 30 than the second bus bar 40, then generating arc. Thus, the second bus bar 40 as the low melting point member is prevented from over heated, generation of blow hole is suppressed, insufficient melting of the first bus bar 30 as the high melting point member is diminished, and welding strength is improved in comparison with the conventional method and structure. According to the TIG welding method and the welded structure by the same concerning to this embodiment, it is possible to weld two metal members, whose melting points differ each other, in the electrical equipment, such as aforementioned motor 10, which is applied to vehicle and is suffered from the vibration and changes of temperature.

### Examples

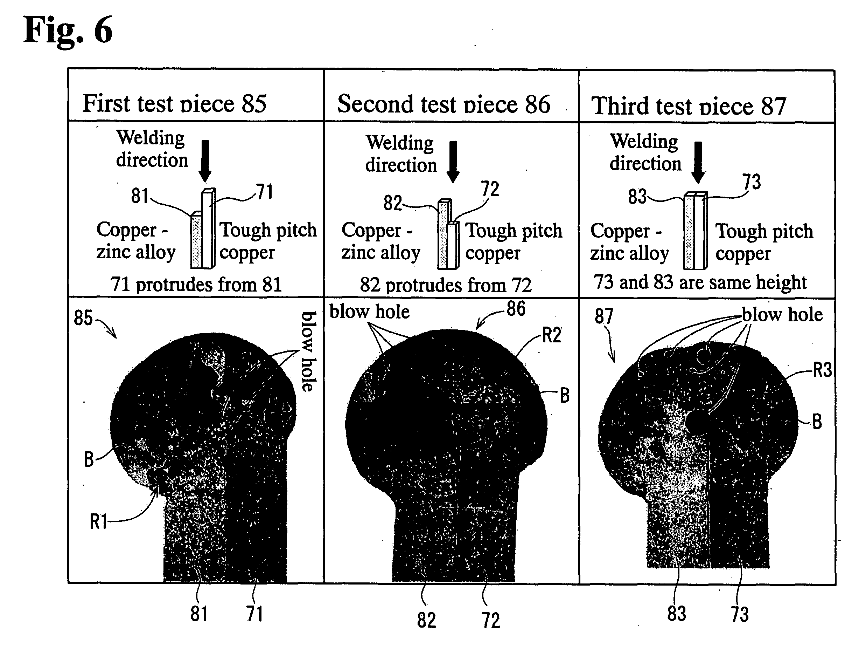

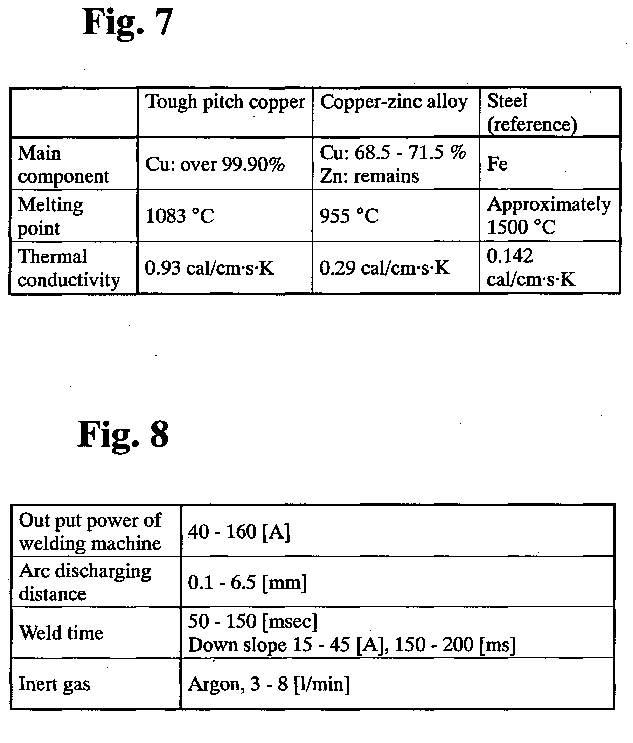

Following experiment was executed in order to confirm effects of the embodiment of the invention.
1) Rectangular-rod-shape high melting point members 71,72 and 73 made of tough pitch copper whose property is shown in Fig. 7 were provided (referring to Fig. 6).
2) Rectangular-rod-shape low melting point members 81, 82 and 83 made of copper-zinc alloy whose property is shown in Fig. 7 were provided (referring to Fig. 6).
3) As shown in the left column of Fig. 6, the high melting point member 71 and the low melting point member 81 were in contact with each other at the respective side walls, and were held under the state that the high melting point member 71 protruded from the top surface of the low melting point member 81 toward upper direction. Arc was generated at only area of clearance between the TIG welding torch and the high melting point member 71. Thus, the melted high melting point member 71 adhered to the downside low melting point member 81 to form a first test piece 85.
4) As shown in the center colmun of Fig. 6, the high melting point member 72 and the low melting point member 82 were in contact with each other at the respective side walls, and were held under the state that the low melting point member 82 protruded from the top surface of the high melting point member 72 toward upper direction. Arc was generated at only area of clearance between the TIG welding torch and the low melting point member 82. Thus, melted low melting point member 82 adhered to the downside high melting point member 72 to form a second test piece 86.
5) As shown in the right column of Fig. 6, the high melting point member 73 and the low melting point member 83 were in contact with each other at the respective side walls, and were held under the state that both top surface of the high melting point member 73 and low melting point member 83 are approximately flat. The TIG welding torch was approached at the contact surface between the high melting point member 73 and the low melting point member 83, and then generating arc to form a third test piece 87.
6) The test pieces 85 - 87 were cut and respective cut surfaces of the test pieces were subjected to etching treatment. Each welded portion of the test piece was examined by way of a metaloscope to weigh blow holes and degree of mixing high melting point member and the low melting point member. Pictures, which were photographed by the metaloscope, of the cut surfaces of the test pieces 85 - 87 are shown at the bottom of Fig. 6. At steps 3), 4) and 5), each TIG welding was performed in accordance with the same condition shown in Fig. 8.

With comparing the test pieces 85 - 87, founded was that blow holes occupied less area in the first test piece 85 subjected to the TIG welding method of the embodiment than that in the second or the third test piece 86 or 87 subjected to the other TIG welding method. Specifically, the first test piece 85 indicated less than approximate1 % of incidence of blow hole, the second test piece 86 indicated approximate 5 % of incidence, and the third test piece 87 indicated approximate 5 %.

Concerning to the second test piece 86, a boundary R2 between a bead B and the high melting point member 72 was clearly shown. On the other hand, concerning to the first test piece 85 employing the TIG welding method of the embodiment, a boundary R1 between a bead B and the low melting point member 81 was shown unclearly. Further, when pictures were colored, founded was that a boundary R3 between a bead B and the high melting point member 73 was clear with respect to the third test piece 87. Therefore, it is proved that the high melting point member 71 and low melting point member 81 were mixed sufficiently in the first test piece 85 subjected to the embodiment in comparison to the second and the third test pieces 86 and 87.

### Other embodiment

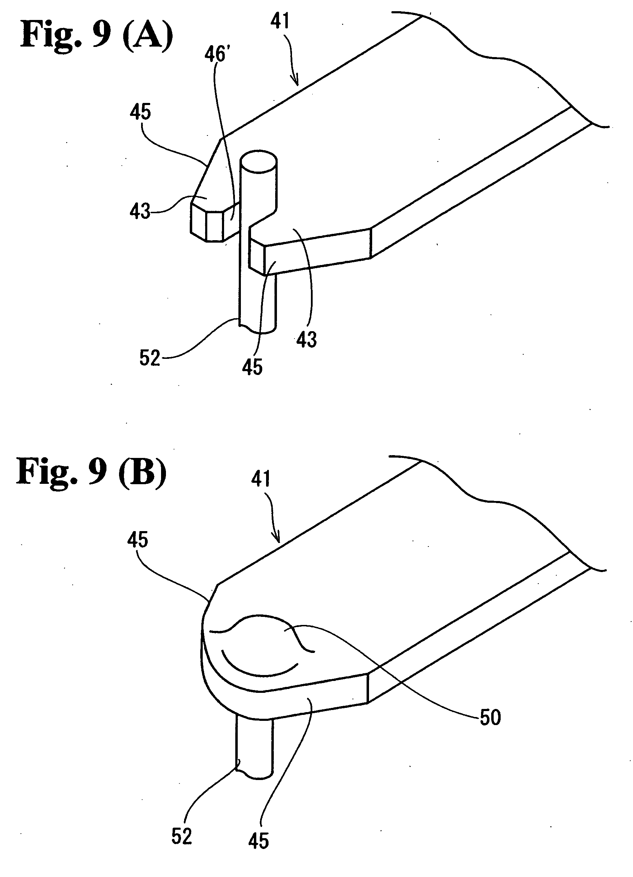

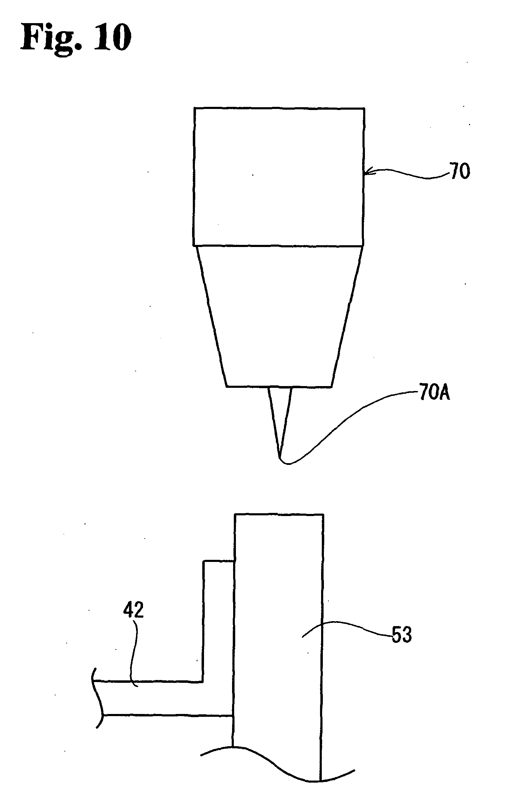

The present invention is not limited to the aforementioned embodiment, for example, modifications described below are included in the scope to be protected by the invention.
(1) In the aforementioned embodiment, the present invention is exemplified by applying to the connecting portion within the motor. However, the invention can be applicable to a connecting portion between members that are provided in various electrical equipments other than motors.
(2) In the embodiment, the present invention is exemplified by applying to the welding between tough pitch copper and copper-zinc alloy However, the invention can be applicable to the welding between members of other kinds of copper alloys, and also applicable to the welding between members of iron alloys or between members of aluminum alloys. Further, the invention can be applicable to the welding, for example, between member of copper alloy and member of aluminum alloy, i.e. welding between different kinds of alloys whose base metals are different from each other.
(3) In the embodiment, the invention is embodied in the welding between the bus bars 30 and 40. However, as shown in Fig. 9 (A) and Fig. 9 (B), a present invention can be applied to a portion of welding between the bus bar 41 and a wire 52. The wire 52 is disposed in a slit 46', whose structure of a tip end is approximately same as that of the second bus bar 40 of the aforementioned embodiment, of the bus bar 41, with protruding from the top surface of the bus bar 41. In such state, the TIG welding torch is set in adjacent to the tip end of the wire 52 to generate arc (referring to Fig. 9 (B)).
(4) In the present invention can be also embodied in welding as shown in Fig. 10, for example. Specifically, a tip end of a bus bar 42 extending in the horizontal direction is upwardly bent by right angle. A wire 53 is brought into contact with the bus bar 42 at the bent tip end thereof to upwardly protrude from the tip end. In such state, the TIG welding torch is set in adjacent to a tip end of the wire 53 to generate arc.

The embodiment described herein is to be regarded as illustrative rather than restrictive. Plural objectives are achieved by the present invention, and yet there is usefulness in the present invention as far as one of the objectives are achieved. Variations and changes may be made by others, and equivalents employed, without departing from spirit of the present invention. Accordingly, it is expressly intended that all variations, changes and equivalents which fall within the spirit and scope of the present invention as defined in the claims, be embraced thereby.

A TIG welding torch 70 is set in more adjacent to a first bus bar 30 than a second bus bar 40 to generate arc. Consequently, the second bus bar 40 serving as a low melting point member is prevented from over heated, occurrence of blow holes is suppressed, and inadequate melting of the first bus bar 30 serving as a high melting point member is improved, resulting in enhancement of welding strength. The method is applicable to electrical equipment, especially to a motor, provided with a vehicle.

## Claims

1. A TIG welding method for welding a high melting point member and a low melting point member whose melting point are different from each other, wherein a TIG welding torch is set in more adjacent to the high melting point member than the low melting point member to generate arc.

2. A TIG welding method according to claim 1, wherein the high melting point member and the low melting point member are mainly composed of same metal.

3. A TIG welding method according to claim 2, wherein both of the high melting point member and the low melting point member are mainly composed of iron.

4. A TIG welding method according to claim 2, wherein both of the high melting point member and the low melting point member are mainly composed of aluminum.

5. A TIG welding method according to claim 2, wherein both of the high melting point member and the low melting point member are mainly composed of copper.

6. A TIG welding method according to claim 5, wherein the high melting point member is made of tough pitch copper and the low melting point member is made of copper-zinc alloy.

7. A TIG welding method according to any one of claim 1 to 6, wherein the low melting point member is a bus bar having a slit splitting a tip end thereof, and a tip end of the high melting point member is inserted into the slit.

8. A welded structure by TIG welding a high melting point member and a low melting point member whose melting point are different from each other, wherein
the high melting point member protrudes from a side surface or an end surface of the low melting point member, and
the protrusion is melted to form a bead to cover the bonding portion between the high melting point member and the low melting point member.

9. A welded structure by TIG welding according to claim 8, wherein the high melting point member and the low melting point member are provided in the electrical equipment for a vehicle.

10. A welded structure by TIG welding according to claim 9, wherein the electrical equipment is a motor applied to a power steering apparatus, and the high melting point member and the low melting point member are bus bars welded together.

11. A welded structure by TIG welding according to any one of claims 8 to 10 wherein,
the low melting point member is bus bar having a slit splitting a tip end thereof,
a tip end the of the high melting point member is inserted into the slit to protrudes from a side surface of the bus bar, then melting to form a bead.
